(19) Europäisches Patentamt
European Patent Office
Office européen des brevets

(11) **EP 1 675 228 B1**

(12) **FASCICULE DE BREVET EUROPEEN**

(45) Date de publication et mention
de la délivrance du brevet:
**23.01.2008 Bulletin 2008/04**

(51) Int Cl.:
*H01S 3/23* $^{(2006.01)}$     *H01S 3/094* $^{(2006.01)}$

(21) Numéro de dépôt: **05112331.3**

(22) Date de dépôt: **16.12.2005**

(54) **Procédé et dispositif d'amplification d'un faisceau laser à haute énergie sans lasage transversal**

Verfahren und Anordnung zur Verstärkung eines hochenergetischen Laserstrahls unter Vermeidung von transversaler Lasertätigkeit

Procedure and arrangement for amplification of a high energy laser beam without transverse lasing

(84) Etats contractants désignés:
**DE FR GB**

(30) Priorité: **22.12.2004 FR 0413734**

(43) Date de publication de la demande:
**28.06.2006 Bulletin 2006/26**

(73) Titulaire: **THALES**
**92200 Neuilly sur Seine (FR)**

(72) Inventeur: **Marquis, M. Emmanuel**
**78830 BULLION (FR)**

(74) Mandataire: **Henriot, Marie-Pierre et al**
**Marks & Clerk France**
**31-33, Avenue Aristide Briand**
**94117 Arcueil Cedex (FR)**

(56) Documents cités:
**FR-A- 2 840 461          US-A- 5 646 773**

- **PETIT S ET AL: "A tunable femtosecond pulses amplifier" OPTICS COMMUNICATIONS, NORTH-HOLLAND PUBLISHING CO. AMSTERDAM, NL, vol. 124, no. 1, 15 février 1996 (1996-02-15), pages 49-55, XP004021614 ISSN: 0030-4018**
- **SWEETSER J ET AL: "Efficient high repetition rate synchronous amplification of a passively mode-locked femtosecond dye laser" APPLIED OPTICS, OPTICAL SOCIETY OF AMERICA, WASHINGTON, US, vol. 32, no. 24, 20 août 1993 (1993-08-20), pages 4471-4479, XP000388171 ISSN: 0003-6935**

## Description

Le domaine de l'invention est celui de l'amplification d'un faisceau laser de haute énergie et du pompage optique associé.

La montée en énergie et en puissance moyenne des lasers pulsés à haute puissance crête, de type Saphir dopé au Titane conduit à l'utilisation de cristaux amplificateurs de grand diamètre nécessitant des énergies de pompage optique pouvant dépasser 100 joules par tir laser. Les puissances crête de ces lasers sont généralement comprises entre le térawatt et le pétawatt. FR-A-2 840 461 décrit un système d'amplification laser à haute puissance.

On rappelle brièvement le principe de fonctionnement d'un dispositif d'amplification de faisceau laser. Celui-ci est illustré en figure 1a. Il comprend principalement un cristal amplificateur de faisceau laser 1 et des faisceaux laser de pompage optique 3. Les faisceaux 3 injectent dans le cristal de l'amplificateur de l'énergie optique. La source laser à l'origine des faisceaux de pompage n'est pas représentée sur la figure. Ensuite, le faisceau laser à amplifier 2 traverse le cristal de l'amplificateur plusieurs fois au moyen de dispositifs optiques à miroirs 21. A chaque passage, il extrait une partie de l'énergie injectée lors du pompage et est ainsi amplifié dans le cristal. Généralement, le nombre de passages est compris entre 2 et 8, tant que l'énergie apportée par les faisceaux de pompe 3 n'est pas totalement extraite par le faisceau laser 2. On améliore ainsi l'extraction de l'énergie apportée par les faisceaux de pompe 3.

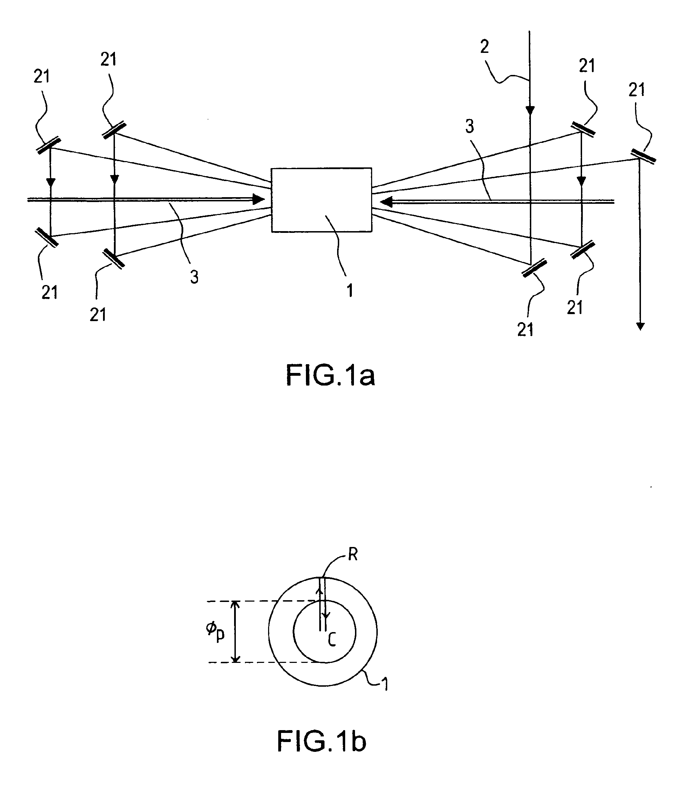

Sur ce type de configuration de dispositif d'amplification de faisceau laser, un phénomène parasite appelé lasage transverse, apparaît entre le dépôt d'énergie dans le cristal par pompage optique et son extraction par le faisceau à amplifier. Ce phénomène est lié à la création dans le cristal d'une sous-cavité laser selon un axe transversal à l'axe du pompage, c'est-à-dire entre deux zones de la surface reliant les faces d'entrée et de sortie du cristal : il vient affecter grandement le rendement du dispositif d'amplification. Le lasage transverse s'établit entre des zones du cristal lorsque la condition d'oscillation de la sous-cavité ansi créée est satisfaite, c'est-à-dire lorsqu'il y a conservation de l'énergie sur un aller-retour du centre C au bord, comme illustré figure 1b.

Cela signifie que le lasage transverse apparaît entre deux zones de la surface ou du pourtour reliant les faces d'entrée et de sortie du cristal lorsque :

$$G_T.R > 1,$$

$G_T$ étant le gain transverse du cristal, et R le coefficient de réflexion à une interface séparant le pourtour du cristal de l'extérieur.

Classiquement, R vaut :

$$R = \left[\frac{\Delta n}{\Sigma n}\right]^2$$

avec

$\Delta n$ :     différence d'indices optiques entre le cristal et l'extérieur

$\Sigma n$ :     Somme des indices optiques du cristal et de l'extérieur.

En pratique, le lasage transverse apparaît pour $G_T.R > 0.2$ et en premier sur les faces du cristal exposées au pompage qui présentent le plus grand gain, c'est-à-dire celles qui absorbent la majorité de l'énergie de pompage.

Les techniques actuelles pour lutter contre le lasage transverse consistent à minimiser le coefficient de réflexion R. Elles sont basées sur l'utilisation de matériaux à indice adapté en revêtement externe du cristal. L'adaptation d'indice ainsi créée limite les réflexions au bord du cristal et prévient l'apparition du lasage transverse.

Cependant, comme décrit précédemment, le cristal reçoit une importante énergie de pompage. Celle-ci induit dans le cristal des effets thermiques qui dégradent le rendement du dispositif d'amplification. Ces cristaux doivent donc être refroidis.

Mais les matériaux d'adaptation d'indice utilisés pour lutter contre le lasage transverse présentent le défaut suivant. Ils sont de mauvais conducteurs de la chaleur et le refroidissement du cristal est dégradé.

Un but important de l'invention est donc d'utiliser un procédé d'amplification de manière à obtenir à la fois une grande qualité de faisceau laser amplifié et des effets de lasage transverse minimisés.

Le principe de l'invention repose sur un procédé de contrôle du gain transverse $G_T$.

Pour atteindre ce but, l'invention propose un procédé d'amplification d'un faisceau laser qui comprend des étapes consistant à :

> effectuer un pompage optique d'un cristal amplificateur de manière à injecter dans le cristal une énergie optique de pompage $E_{totale}$,
>
> amplifier le faisceau laser au moyen du cristal amplificateur et d'un système optique à N passages c'est-à-dire apte à injecter N fois le faisceau laser dans le cristal amplificateur, N étant un entier >1.

Il est principalement caractérisé en ce que le pompage optique est temporellement réparti en n pompages partiels, l'énergie optique d'un pompage partiel étant une fraction de $E_{totale}$, n étant un entier $2\leq n\leq N$ et en ce que le faisceau laser est injecté dans le cristal amplificateur au moins une fois après chaque pompage partiel.

Le gain transverse croît en fonction de l'énergie optique de pompage. Une répartition temporelle des apports d'énergie de pompage permet de limiter les énergies des pompages partiels et donc de limiter $G_T$. Le lasage transverse est par conséquent minimisé, voire supprimé sans diminuer l'énergie finale du faisceau à amplifier.

Selon une caractéristique de l'invention, $\Delta T_{passage}$ étant la durée d'un passage du faisceau laser dans le système optique, cette durée étant déterminée par la géométrie du système optique, et $\Delta T_{pompage}$ étant l'intervalle de temps entre deux pompages, on a

$$\Delta T_{pompage} = k \cdot \Delta T_{passage} ,$$

k étant un entier $\geq 1$.

Selon une autre caractéristique de l'invention, les pompages partiels sont obtenus à partir de plusieurs sources de pompage optique telles que des lasers de pompage optique.

Le cristal amplificateur est par exemple à base de titane et de saphir.

L'invention a aussi pour objet un dispositif d'amplification de faisceau laser comprenant au moins un cristal amplificateur, un système optique à N passages c'est-à-dire apte à injecter N fois le faisceau laser dans le cristal amplificateur, N étant un entier >1, et un dispositif de pompage optique par au moins deux faisceaux laser de pompage traversant le cristal amplificateur. Il est caractérisé en ce qu'il comporte un dispositif de synchronisation apte à répartir temporellement le déclenchement des faisceaux laser de pompage avant au moins un passage du faisceau laser dans le cristal amplificateur.

Selon un mode de réalisation de l'invention, N=4, et le dispositif de synchronisation est apte à déclencher un laser de pompage avant le premier puis avant le troisième passage du faisceau à amplifier dans le cristal.

D'autres caractéristiques et avantages de l'invention apparaîtront à la lecture de la description détaillée qui suit, faite à titre d'exemple non limitatif et en référence aux dessins annexés dans lesquels :

- la figure 1a déjà décrite représente le schéma de principe d'un dispositif d'amplification de faisceau laser ; la figure 1 b déjà décrite illustre un aller-retour d'un faisceau laser transverse, du centre C au bord du cristal représenté en coupe ;
- la figure 2 représente schématiquement l'évolution temporelle de la fluence stockée $J_{STO}$ dans le cristal amplificateur, initialement et après 1, 2 puis 3 passages, dans un cas classique (A) et selon l'invention (B) ;
- la figure 3 représente schématiquement l'évolution temporelle du gain transverse $G_T$ dans le cristal amplificateur, initialement et après 1, 2 puis 3 passages, dans un cas classique (A) et selon l'invention (B) ;
- les figures 4 et 5 représentent schématiquement la variation d'énergie absorbée par le cristal amplificateur le long de son axe ;
- la figure 6 représente schématiquement un dispositif d'amplification d'un faisceau laser selon l'invention ;
- la figure 7a représente schématiquement un histogramme de l'énergie du faisceau de pompage initial et de l'évolution temporelle du faisceau laser à amplifier initialement et après 1, 2, 3 puis 4 passages, dans un cas classique ;
- la figure 7b représente schématiquement un histogramme de l'énergie des faisceaux de pompage partiel et de l'évolution temporelle du faisceau laser à amplifier initialement et après 1, 2, 3 puis 4 passages, selon l'invention.

On va décrire le calcul du gain transverse.

A chaque passage du faisceau dans le cristal, la valeur du gain d'amplification G est égal au rapport de l'énergie de sortie $E_{OUT}$ sur l'énergie d'entrée avant amplification $E_{IN}$.

L'énergie de sortie $E_{OUT}$ du faisceau laser en sortie de l'amplificateur est donnée par l'équation de Frantz et Nodvik. Elle vaut :

$$E_{OUT} = J_{SAT}.S.\ln\left[\frac{J_{STO}}{J_{SAT}}\left(e^{\frac{E_{IN}}{S.J_{SAT}}} - 1\right) + 1\right]$$

avec :

$E_{IN}$ :        Energie d'entrée avant amplification ;
$J_{STO}$:        Fluence stockée disponible pour le gain d'amplification ;
$J_{SAT}$ :        Fluence de saturation du cristal ;
S :        Surface du faisceau laser.

On a également :

$J_{IN}$ :    Fluence d'entrée avant amplification avec $J_{IN} = \dfrac{E_{IN}}{S}$ ;

Lorsque $J_{IN}$ est très inférieur à $J_{SAT}$, l'équation précédente se simplifie. Dans ce cas, la valeur du gain d'amplification G qui est égale au rapport de l'énergie de sortie $E_{OUT}$ sur l'énergie d'entrée avant amplification $E_{IN}$ vaut :

$$G = e^{\frac{J_{STO}}{J_{SAT}}}$$

Par ailleurs , $G = e^{g_0 l}$
$g_0$ étant le gain linéique du cristal amplificateur et l la longueur du cristal pompé.
On en déduit $g_0$ :

$$g_o = \frac{J_{STO}}{l.J_{SAT}}$$

On démontre que le gain transverse $G_T$ vaut :

$$G_T = e^{g_o.\Phi_P}$$

avec $\phi_P$ le diamètre du faisceau laser de pompe indiqué figure 1 b.
On obtient alors pour $G_T$ :

$$G_T = e^{\frac{J_{STO}}{J_{SAT}.l}.\Phi_p}$$

Pour chaque passage du faisceau laser dans le cristal, on a :

$$J_{STO}(n) = J_{STO}(n-1) - J_E(n)$$

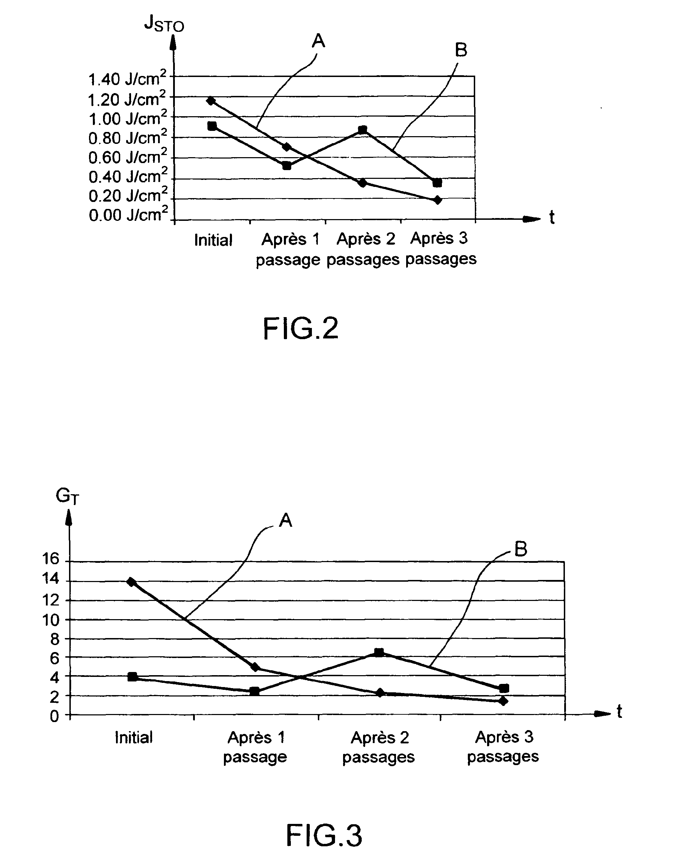

Avec $J_{STO}(n)$ la fluence stockée dans le cristal qui reste disponible au nième passage du faisceau et $J_E(n)$ la fluence extraite lors de ce passage.
La configuration classique crée une valeur $J_{STO}$ maximale au premier passage qui ne fait que décroître lors des passages suivants, comme illustré sur la courbe A de la figure 2. Cette configuration crée donc un gain transverse $G_T$ maximal avant le premier passage, comme illustré sur la courbe A de la figure 3, ce qui favorise l'apparition du lasage transverse.

En outre le gain transverse $G_T$ n'est pas uniformément réparti le long du cristal comme on va le voir à présent.

On a : $J_{STO} = E_{STO}/S$,

avec $E_{STO}$ l'énergie stockée disponible pour le gain d'amplification et S la surface du faisceau laser de pompage.

On démontre encore que :

$$E_{STO} = E_{PUMP}.\alpha.l.\frac{\lambda_{pump}}{\lambda_{laser}}$$

avec $E_{PUMP}$ l'énergie apportée par le laser de pompage, $\alpha$ le coefficient d'absorption linéique du faisceau de pompage, l la longueur du cristal pompé, $\lambda_{PUMP}$ et $\lambda_{LASER}$ les longueurs d'onde du faisceau laser de pompage et du faisceau laser amplifié ; le rapport de ces longueurs d'onde correspond au rendement quantique du cristal amplificateur. Par exemple, pour un cristal en Saphir dopé au Titane dont le faisceau de pompage est à une longueur d'onde $\lambda_{PUMP}$ de 532 nanomètres et le faisceau laser amplifié est à une longueur d'onde $\lambda_{LASER}$ de 800 nanomètres, le rendement quantique vaut 0.665.

L'énergie stockée $E_{STO}$ ne l'est pas uniformément le long du cristal. On démontre que la variation d'énergie absorbée $E_{ABS}(x)$ le long du cristal dans la direction Ox vaut :

$$E_{ABS}(x) = \left(1 - e^{-\alpha.x}\right)$$

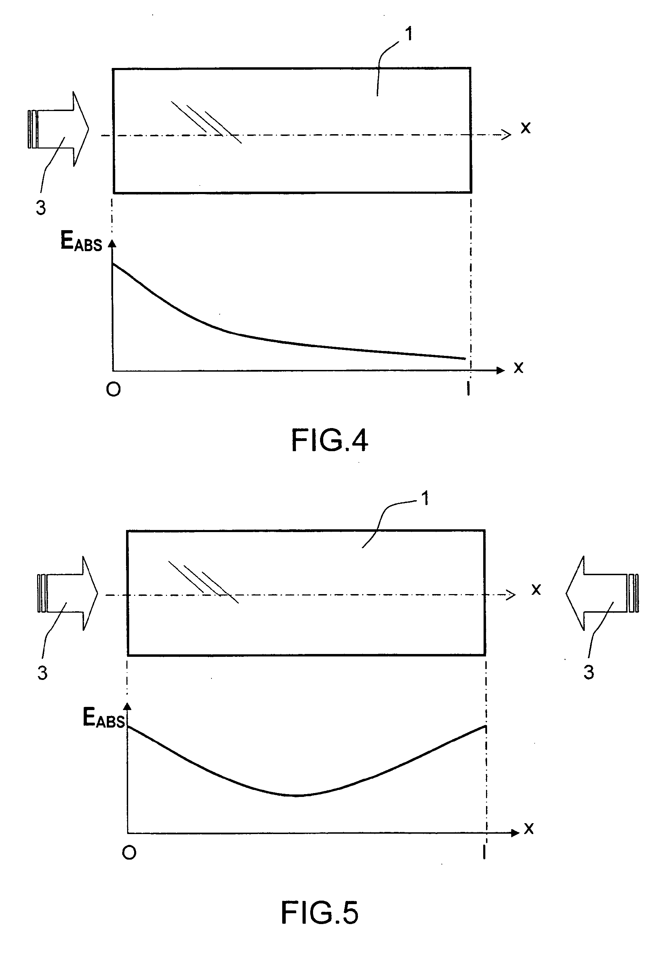

Les figures 4 et 5 représentent la variation de l'énergie absorbée $E_{ABS}$. Sur la figure 4, un seul faisceau de pompage 3 traverse le cristal 1. Dans ce cas, la répartition d'énergie absorbée diminue constamment d'une extrémité à l'autre du cristal. Sur la figure 5, deux faisceaux de pompage opposés 3 traversent le cristal 1. Dans ce cas, bien entendu, la répartition d'énergie absorbée est symétrique et les variations d'énergie sont atténuées. Cependant, les extrémités du cristal contiennent encore plus d'énergie absorbée que sa partie centrale. Par conséquent, comme $J_{STO}$ est proportionnelle à $E_{ABS}$, le gain transverse $G_T$ est plus important aux extrémités du cristal qu'en son centre, favorisant ainsi les effets de lasage transverse dans les parties extrêmes du cristal, près des faces d'entrée et de sortie.

Le procédé selon l'invention est basé sur une répartition temporelle des apports d'énergie de pompage de manière à diminuer la plus grande valeur de $J_{STO}$ en l'occurrence $J_{STO}$ initiale, notamment aux extrémités du cristal. Par voie de conséquence on diminue aussi le gain transverse qui croît en fonction de $J_{STO}$.

En considérant que les apports d'énergie sont répartis en I fois, on a alors :

$$J_{STO}(n) = J_{STO}(n-1) - J_E(n) + J_{POMP}(i).$$

Avec : $J_E(n)$ la fluence extraite lors du n ième passage du faisceau dans le cristal, n étant un entier variant de 1 à N,

$J_{POMP}(i)$ la fluence de pompage apportée lors du ième apport d'énergie, i étant un entier variant de 1 à I, I<N, aussi désignée fluence de pompage partiel.

L'évolution de $J_{STO}$ selon l'invention est illustrée sur la courbe B de la figure 2 dans le cas d'un apport d'énergie réparti en deux fois, une première fois avant le premier passage et une deuxième fois entre les 1er et 2è passages : $J_{STO}$ reste toujours nettement inférieur à la valeur initiale de l'art antérieur.

On a aussi :

$$J_{STO}(\text{Total}) = \sum_i J_{POMP}(i) \quad \text{et bien sûr} \quad J_{STO}(n) < J_{STO}(\text{Total})$$

La limitation de $J_{STO}(n)$ limite ainsi $G_T$ et diminue donc le produit $G_T.R$. Le lasage transverse est par conséquent minimisé, voire supprimé. L'évolution de $G_T$ selon l'invention est illustrée sur la courbe B de la figure 3 : $G_T$ reste toujours nettement inférieur à la valeur initiale de l'art antérieur.

Le raisonnement précédent s'applique de la même façon lorsque l'on remplace le terme fluence par le terme énergie.

De même que la somme des fluences de pompage partiel est égale à la fluence stockée totale, la somme des énergies des pompages partiels est égale à l'énergie de pompage totale $E_{totale}$.

Les énergies des pompages partiels peuvent être identiques ($J_{POMP}(i) = J_{POMP}(i+1)$), croissantes ($J_{POMP}(i) < J_{POMP}(i+1)$) ou décroissantes ($J_{POMP}(i) > J_{POMP}(i+1)$).

Les apports de pompage partiel sont effectués de préférence lorsque le faisceau à amplifier est à l'extérieur du cristal c'est-à-dire pendant son passage dans le système optique. En outre, $\Delta T_{passage}$ étant la durée d'un passage dans le système optique déterminée par la géométrie du système optique, et $\Delta T_{pompage}$ étant l'intervalle de temps entre deux pompages partiels, on a :

$$\Delta T_{pompage} = k \cdot \Delta T_{passage} \,,$$

k étant un entier $\geq 1$.

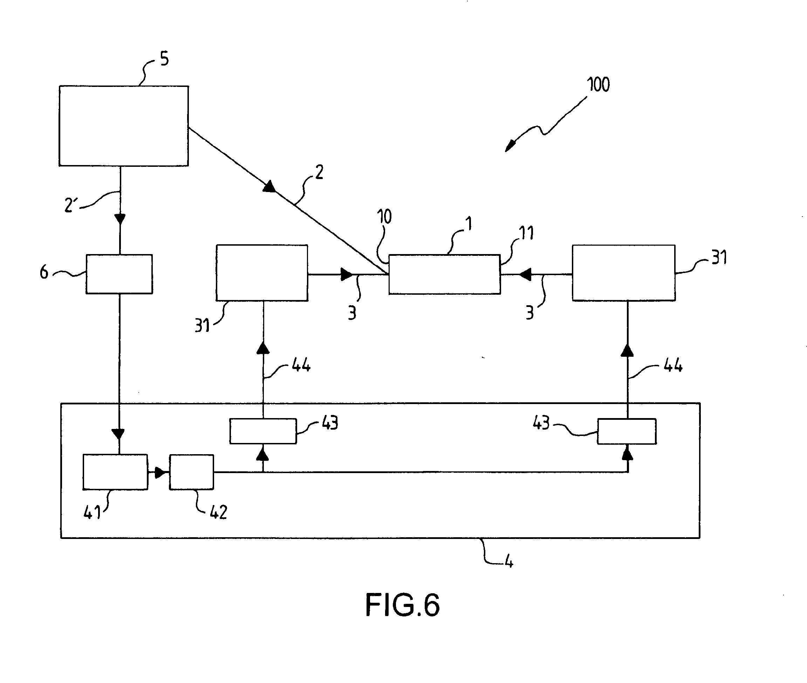

On va à présent décrire en relation avec la figure 6, un dispositif d'amplification 100 de faisceau laser selon l'invention.

Il comprend un oscillateur laser 5 apte à émettre le faisceau laser 2 à amplifier.

Il comprend un cristal amplificateur 1 ayant la forme d'un cylindre droit comprenant une face d'entrée 10 et une face de sortie 11 de forme circulaire, le faisceau laser amplifié circulant entre lesdites faces ; le matériau du cristal amplificateur est un matériau apte au pompage optique. Typiquement, il est constitué de titane et de saphir. Il comprend aussi un système optique à N passages c'est-à-dire apte à injecter N fois le faisceau laser dans le cristal amplificateur : ce système n'est pas représenté sur cette figure pour ne pas la surcharger.

Il comprend également un dispositif de pompage optique par au moins deux faisceaux laser de pompage 3 traversant le cristal amplificateur 1. Les faisceaux de pompage 3 sont produits par des lasers 31. Sur la figure on a représenté deux lasers 31.

Selon un mode de réalisation particulier de l'invention, le pompage du cristal est réalisé de façon longitudinale, c'est-à-dire que la propagation des faisceaux de pompage se fait dans une direction sensiblement parallèle à la génératrice du cylindre constituant le cristal. Bien entendu, le faisceau de pompage a une forme circulaire pour être bien adapté à la forme du cristal. De plus, la répartition d'énergie à l'intérieur du faisceau laser de pompe est constante.

Il comporte en outre un dispositif de synchronisation 4 apte à répartir temporellement le déclenchement des faisceaux laser de pompage 3 avant au moins un passage du faisceau laser 2 dans le cristal amplificateur 1. Il s'agit par exemple d'un dispositif de synchronisation de type Masterclock.

Ce dispositif de synchronisation 4 est relié à l'oscillateur laser 5 via un détecteur radio-fréquence 6 tel qu'une photodiode. Ce détecteur 6 est destiné à détecter une petite partie 2' du faisceau laser 2 émis par l'oscillateur 5. Le dispositif de synchronisation comprend par exemple un élément 41 de filtrage du bruit, relié à un diviseur 42 qui permet de caler la cadence de l'oscillateur laser (variant typiquement entre 20 MHz et 100 MHz) avec celle de l'amplificateur (variant typiquement entre 10 Hz et 10 kHz). Le diviseur 42 est relié à au moins deux lignes à retard 43. Chacune de ces lignes à retard est destinée à émettre un signal 44 de déclenchement de l'émission du laser de pompage 3 par le laser 31 auquel elle est reliée. D'une ligne à retard à l'autre ce signal 44 est décalé temporellement. Dans l'exemple de la figure le dispositif de synchronisation comprend deux lignes à retard 43.

On a obtenu les résultats suivants en utilisant un dispositif d'amplification à 4 passages (N=4), équipé d'un barreau de cristal Ti :Sa à section ronde et de deux lasers de pompage, de même énergie.

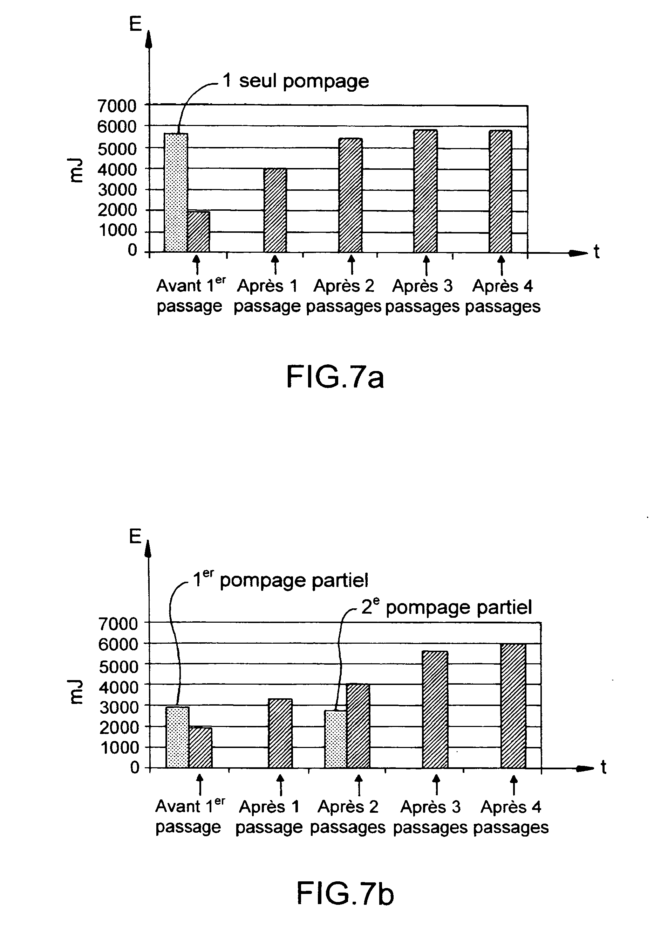

L'évolution temporelle des énergies selon un fonctionnement classique ou conforme à l'invention sont respectivement illustrées figure 7a et 7b. L'énergie avant le 1$^{er}$ passage est l'énergie initiale du faisceau laser à amplifier. Dans le premier cas, les 2 lasers sont classiquement déclenchés avant le premier passage du faisceau dans le cristal et libèrent ainsi une énergie de pompage initiale égale à l'énergie de pompage totale ; dans le second cas, un premier laser est déclenché avant le premier passage et le deuxième laser entre les deuxième et troisième passages, libérant chacun une énergie de pompage partiel égale à la moitié de l'énergie de pompage totale. L'énergie finale du faisceau à amplifier, en l'occurrence l'énergie après son 4è passage dans le cristal est quasiment la même dans les deux cas.

Des résultats comparables peuvent être obtenus avec un barreau de cristal amplificateur Ti :Sa à section carrée.

Le procédé selon l'invention permet ainsi de diminuer les risques de lasage transverse sans diminuer l'énergie finale du faisceau à amplifier.

Selon un autre mode de réalisation, le ou les lasers de pompage sont déclenchés avec un décalage temporel, l'énergie de chaque laser étant partiellement libérée à chaque déclenchement.

**Revendications**

**1.** Procédé d'amplification d'un faisceau laser qui comprend des étapes consistant à :

effectuer un pompage optique d'un cristal amplificateur de manière à injecter dans le cristal une énergie optique de pompage $E_{totale}$,
amplifier le faisceau laser au moyen du cristal amplificateur et d'un système optique à N passages c'est-à-dire apte à injecter N fois le faisceau laser dans le cristal amplificateur, N étant un entier supérieur à 1,

**caractérisé en ce que** le pompage optique est temporellement réparti en n pompages partiels, l'énergie optique d'un pompage partiel étant une fraction de $E_{totale}$, n étant un entier $2 \leq n \leq N$ et **en ce que** le faisceau laser est injecté dans le cristal amplificateur au moins une fois après chaque pompage partiel.

**2.** Procédé selon la revendication précédente, **caractérisé en ce que** $\Delta T_{passage}$ étant la durée d'un passage du faisceau dans le système optique déterminée par la géométrie du système optique, et $\Delta T_{pompage}$ étant l'intervalle de temps entre deux pompages, on a

$$\Delta T_{pompage} = k \cdot \Delta T_{passage} ,$$

k étant un entier $\geq 1$.

**3.** Procédé selon l'une quelconque des revendications précédentes, **caractérisé en ce que** la somme des énergies des pompages partiels est égale à $E_{totale}$.

**4.** Procédé selon l'une quelconque des revendications précédentes, **caractérisé en ce que** les énergies des pompages partiels sont identiques.

**5.** Procédé selon l'une quelconque des revendications 1 à 3, **caractérisé en ce que** les énergies des pompages partiels sont croissantes ou décroissantes.

**6.** Procédé selon l'une quelconque des revendications précédentes, **caractérisé en ce que** les pompages partiels sont obtenus à partir de plusieurs sources de pompage optique telles que des lasers de pompage optique.

**7.** Procédé selon l'une quelconque des revendications précédentes, **caractérisé en ce que** le cristal amplificateur est à base de titane et de saphir.

**8.** Dispositif d'amplification (100) de faisceau laser (2) comprenant au moins un cristal amplificateur (1), un système optique à N passages c'est-à-dire apte à injecter N fois le faisceau laser dans le cristal amplificateur, N étant un entier supérieur à 1, et un dispositif de pompage optique par au moins deux faisceaux laser de pompage (3) traversant le cristal amplificateur (1), **caractérisé en ce qu'**il comporte un dispositif de synchronisation (4) apte à répartir temporellement le déclenchement des faisceaux laser de pompage (3) avant au moins un passage du faisceau laser dans le cristal amplificateur.

**9.** Dispositif d'amplification (100) selon la revendication précédente, **caractérisé en ce que** N=4, et **en ce que** le dispositif de synchronisation (4) est apte à déclencher un laser de pompage avant le premier puis avant le troisième passage du faisceau à amplifier dans le cristal.

**10.** Dispositif d'amplification (100) selon l'une quelconque des revendications 8 ou 9, **caractérisé en ce que** le cristal amplificateur (1) est à base de titane et de saphir.

**11.** Dispositif d'amplification (100) selon l'une quelconque des revendications 8 à 10, **caractérisé en ce que** le cristal amplificateur (1) est un barreau présentant une section ronde ou carrée.

**Claims**

**1.** Method of amplifying a laser beam which includes steps consisting in:

- optically pumping an amplifying crystal so as to inject an optical pumping energy $E_{total}$ into the crystal; and
- amplifying the laser beam by means of the amplifying crystal and an optical system with N passes, that is to say capable of injecting the laser beam into the amplifying crystal N times, N being an integer greater than 1,

**characterized in that** the optical pumping is temporally divided into n partial pumpings, the optical energy of a partial pumping being a fraction of $E_{total}$, n being an integer where $2 \leq n \leq N$, and **in that** the laser beam is injected into the amplifying crystal at least once after each partial pumping.

2. Method according to the preceding claim, **characterized in that**, $\Delta T_{pass}$ being the duration of a pass of the beam in the optical system determined by the geometry of the optical system, and $\Delta T_{pump}$ being the time interval between two pumpings, the following applies:

$$\Delta T_{pump} = k.\Delta T_{pass},$$

k being an integer $\geq 1$.

3. Method according to either of the preceding claims, **characterized in that** the sum of the partial pumping energies is equal to $E_{total}$.

4. Method according to any one of the preceding claims, **characterized in that** the partial pumping energies are identical.

5. Method according to any one of Claims 1 to 3, **characterized in that** partial pumping energies are increasing or decreasing.

6. Method according to any one of the preceding claims, **characterized in that** the partial pumpings are obtained from a number of optical pumping sources such as optical pump lasers.

7. Method according to any one of the preceding claims, **characterized in that** the amplifying crystal is based on titanium and sapphire.

8. Device for amplifying (100) a laser beam (2) comprising at least one amplifying crystal (1), an optical system with N passes, that is to say capable of injecting the laser beam into the amplifying crystal N times, N being an integer greater than 1, and a device for optical pump by at least two pump laser beams (3) passing through the amplifying crystal (1), **characterized in that** it includes a synchronization device (4) capable of temporally distributing the triggering of the pump laser beams (3) before at least one pass of the laser beam in the amplifying crystal.

9. Amplification device (100) according to the preceding claim, **characterized in that** N=4, and **in that** the synchronization device (4) is capable of triggering a pump laser before the first and then before the third pass of the beam to be amplified in the crystal.

10. Amplification device (100) according to either of Claims 8 and 9, **characterized in that** the amplifying crystal (1) is based on titanium and sapphire.

11. Amplification device (100) according to any one of Claims 8 to 10, **characterized in that** the amplifying crystal (1) is a rod with a round or square section.

**Patentansprüche**

1. Verfahren zur Verstärkung eines Laserstrahls, das Schritte aufweist, die darin bestehen:

ein optisches Pumpen eines Verstärkerkristalls durchzuführen, um eine optische Pumpenergie $E_{total}$ in den Kristall einzuspeisen,
den Laserstrahl mittels des Verstärkerkristalls und eines optischen Systems mit N Durchgängen zu verstärken, d.h. das ausgelegt ist, um den Laserstrahl N mal in den Verstärkerkristall einzuspeisen, wobei N eine ganze Zahl größer als 1 ist,

**dadurch gekennzeichnet, dass** das optische Pumpen zeitlich in n Teilpumpvorgänge aufgeteilt ist, wobei die optische Energie eines Teilpumpvorgangs ein Bruchteil von $E_{total}$ ist, n eine ganze Zahl $2 \leq n \leq N$ ist, und dass der Laserstrahl mindestens einmal nach jedem Teilpumpvorgang in den Verstärkerkristall eingespeist wird.

2. Verfahren nach dem vorhergehenden Anspruch, **dadurch gekennzeichnet, dass**, wenn $\Delta T_{Durchgang}$ die Dauer eines Durchgangs des Strahls durch das optische System ist, die durch die Geometrie des optischen Systems bestimmt wird, und $\Delta T_{Pumpen}$ das Zeitintervall zwischen zwei Pumpvorgängen ist, gilt

$$\Delta T_{Pumpen} = k.\Delta T_{Durchgang},$$

wobei k eine ganze Zahl $\geq 1$ ist.

3. Verfahren nach einem der vorhergehenden Ansprüche, **dadurch gekennzeichnet, dass** die Summe der Energien der Teilpumpvorgänge gleich $E_{total}$ ist.

4. Verfahren nach einem der vorhergehenden Ansprüche, **dadurch gekennzeichnet, dass** die Energien der Teilpumpvorgänge gleich sind.

5. Verfahren nach einem der Ansprüche 1 bis 3, **dadurch gekennzeichnet, dass** die Energien der Teilpumpvorgänge zunehmend oder abnehmend sind.

6. Verfahren nach einem der vorhergehenden Ansprüche, **dadurch gekennzeichnet, dass** die Teilpumpvorgänge ausgehend von mehreren optischen Pumpquellen wie optischen Pumplasern erhalten werden.

7. Verfahren nach einem der vorhergehenden Ansprüche, **dadurch gekennzeichnet, dass** der Verstärkerkristall auf der Basis von Titan und Saphir ist.

8. Verstärkungsvorrichtung (100) eines Laserstrahls (2), die mindestens einen Verstärkerkristall (1), ein optisches System mit N Durchgängen, d.h. ausgelegt, um den Laserstrahl N mal in den Verstärkerkristall einzuspeisen, wobei N eine ganze Zahl größer als 1 ist, und eine optische Pumpvorrichtung durch mindestens zwei Pumplaserstrahlen (3) aufweist, die den Verstärkerkristall (1) durchqueren, **dadurch gekennzeichnet, dass** sie eine Synchronisationsvorrichtung (4) aufweist, die ausgelegt ist, um das Aktivieren der Pumplaserstrahlen (3) vor mindestens einem Durchgang des Laserstrahls durch den Verstärkerkristall zeitlich zu verteilen.

9. Verstärkungsvorrichtung (100) nach dem vorhergehenden Anspruch, **dadurch gekennzeichnet, dass** N=4, und dass die Synchronisationsvorrichtung (4) ausgelegt ist, um einen Pumplaser vor dem ersten und dann vor dem dritten Durchgang des zu verstärkenden Strahls durch den Kristall zu aktivieren.

10. Verstärkungsvorrichtung (100) nach einem der Ansprüche 8 oder 9, **dadurch gekennzeichnet, dass** der Verstärkerkristall (1) auf der Basis von Titan und Saphir ist.

11. Verstärkungsvorrichtung (100) nach einem der Ansprüche 8 bis 10, **dadurch gekennzeichnet, dass** der Verstärkerkristall (1) ein Stab ist, der einen runden oder quadratischen Querschnitt aufweist.

FIG.1a

FIG.1b

FIG.2

FIG.3

**FIG.4**

**FIG.5**

FIG.6

EP 1 675 228 B1

FIG.7a

FIG.7b

**RÉFÉRENCES CITÉES DANS LA DESCRIPTION**

**Documents brevets cités dans la description**

- FR 2840461 A